# EUROPEAN PATENT APPLICATION

(11) **EP 4 415 088 A1**
(43) Date of publication of application: **14.08.2024**
(21) Application number: 22948946.3
(22) Date of filing: 26.09.2022
(51) Int. Cl.: H01M 10/04

(54) **BATTERY SHELL FLATNESS ADJUSTMENT METHOD AND DEVICE, AND BATTERY MANUFACTURING SYSTEM**

(30) Priority: 01.07.2022 CN 202210764580
(71) Applicant: Jiangsu Contemporary Amperex Technology Limited, Liyang City, Changzhou City, Jiangsu 213300 (CN)
(72) Inventor: ZHANG, Bin, Jiangsu 213300 (CN); CHENG, Peng, Jiangsu 213300 (CN); TANG, Yunlu, Jiangsu 213300 (CN)
(74) Representative: Ran, Handong
(86) International application number: PCT/CN2022/121163
(87) International publication number: WO 2024/000857

(57) **Abstract**

Disclosed in the present application are a battery case flatness adjustment method and device, and a battery manufacturing system. The battery case flatness adjustment method comprises: receiving an unsealed battery cell subjected to a formation process; controlling a cooling device to perform cooling and temperature reduction on the unsealed battery cell; and after cooling and temperature reduction of the unsealed battery cell are completed, outputting the unsealed battery cell. According to the battery case flatness adjustment method in the present application, cooling and temperature reduction are performed on an unsealed battery cell subjected to a formation process, so that the temperature difference between the inside and outside of the unsealed battery cell is reduced; then, a sealing operation is performed on the cooled unsealed battery cell, avoiding flatness over-specification of large surfaces and side surfaces of the battery case due to the pressure difference caused by the temperature difference between the inside and outside of the battery cell.

## Description

### CROSS-REFERENCE TO RELATED APPLICATIONS

This application claims priority to Chinese patent application No. 202210764580.6, filed on July 01, 2022 and entitled "FLATNESS ADJUSTMENT METHOD AND DEVICE FOR BATTERY HOUSING, AND BATTERY MANUFACTURING SYSTEM", which is incorporated herein by reference in its entirety.

### TECHNICAL FIELD

This application relates to the field of electric manufacturing technologies, and in particular, to a flatness adjustment method and device for battery housing, and a battery manufacturing system.

### BACKGROUND

With the development of new energies, an increasing number of fields have been using the new energies as power sources. With the advantages such as high energy density, support of cyclic charging, safety, and environment friendliness, batteries are widely used in new energy vehicles, consumer electronics, energy storage systems, and other fields.

During the production of batteries, it is necessary to wrap individual battery cells with an insulation blue film. If the flatness of the battery cell is not within a specification range, the yield of wrapping with the insulation blue film is decreased.

### SUMMARY

In view of the foregoing problem, this application provides a flatness adjustment method and device for battery housing, and a battery manufacturing system, so as to ensure the flatness of the battery housing.

A first aspect of this application provides a flatness adjustment method for battery housing, including:
receiving an unsealed battery cell after a formation process;
controlling a cooling apparatus to cool the unsealed battery cell; and
outputting the unsealed battery cell upon completion of cooling the unsealed battery cell.

According to the flatness adjustment method for battery housing of this application, the unsealed battery cell after formation is cooled, reducing a difference between inside and outside temperatures of the unsealed battery cell, and then, the cooled unsealed battery cell is sealed, which avoids the flatness of the large surface and side surface of the battery housing going beyond specification due to the pressure difference caused by the difference between inside and outside temperatures of the battery cell.

In some embodiments of this application, in the step of controlling a cooling apparatus to cool the unsealed battery cell, the cooling apparatus cools the unsealed battery cell by blowing cold air. As the cooling apparatus is arranged to dissipate heat from the unsealed battery cell by blowing cold air towards the unsealed battery cell, the structure of the cooling apparatus can be simplified, reducing the manufacturing costs of the device.

In some embodiments of this application, the step of controlling a cooling apparatus to cool the unsealed battery cell includes:
matching cooling parameters according to the type of the unsealed battery cell; and
controlling, according to the cooling parameters, the cooling apparatus to operate.

Cooling parameters are matched for different types of unsealed battery cells, thus ensuring the cooling effect on the unsealed battery cells, such that in the manufacture of different types of battery cells, it is possible to further ensure that battery housings of different types of battery cells have good and consistent flatness.

In some embodiments of this application, the cooling parameters include a preset cooling time, and the preset cooling time is denoted as t, where t∈(0 min, 60 min). With the preset cooling time set, the unsealed battery cell can be sufficiently cooled and the effect after cooling can be ensured. The cooled unsealed battery cell is sealed to further prevent the problem of the flatness of the large surface and side surface of the battery housing going beyond specification caused by the difference between inside and outside temperatures of the battery cell.

In some embodiments of this application, the preset cooling time t is set to 15 min. With the preset cooling time set to 15 min, on the basis of ensuring cooling on the battery cell, the production pace can be ensured, thus guaranteeing the production efficiency.

In some embodiments of this application, the step of outputting the unsealed battery cell upon completion of cooling the unsealed battery cell includes:
obtaining a current cooling time;
comparing the current cooling time with the preset cooling time; and
controlling, under the condition that the current cooling time is greater than or equal to the preset cooling time, the cooling apparatus to stop operating.

With the determination of whether the current cooling time has reached the preset cooling time, it is possible to ensure the cooling effect on the unsealed battery cell and reduce the operation time of the cooling apparatus, thus lowering the energy consumption and reducing the production costs.

In some embodiments of this application, the cooling parameters include a preset cooling temperature, and the preset cooling temperature is denoted as T, where T∈(0°C, 25°C). With the preset cooling temperature set, the large temperature difference between the preset cooling temperature and the temperature of the unsealed battery cell is used for quickly cooling the unsealed battery cell, thus shortening the cooling time and further ensuring the production pace.

In some embodiments of this application, the preset cooling temperature T is set to 16°C. With the preset cooling temperature set to 16°C, on the basis of ensuring the cooling on the battery cell and the production pace, the energy consumption can be reduced, thus reducing the manufacturing costs.

In some embodiments of this application, the cooling parameters include a preset cooling airflow speed, and the preset cooling airflow speed is denoted as v, where v∈(0 m/s, 25 m/s). The cooling apparatus cools the unsealed battery cell by blowing cold air. With the preset cooling airflow speed set, heat can be exchanged quickly between the unsealed battery cell and the cold air, thus increasing the rate of heat exchange to quickly cool the unsealed battery cell and further ensuring the production pace.

In some embodiments of this application, the preset cooling airflow speed v is set to 4 m/s. The cooling apparatus cools the unsealed battery cell by blowing cold air. With the preset cooling airflow speed set to 4 m/s, on the basis of ensuring the cooling on the battery cell, the situation can be avoided in which the unsealed battery cell is blown down and damaged by the cold air, thus ensuring the good production quality of the battery cell.

In some embodiments of this application, after the step of receiving an unsealed battery cell after a formation process, and before the step of controlling a cooling apparatus to cool the unsealed battery cell, the method further includes:
obtaining a current position of the unsealed battery cell;
determining, based on the current position of the unsealed battery cell, whether the unsealed battery cell has reached a cooling position; and
controlling, under the condition that the unsealed battery cell has reached the cooling position, the cooling apparatus to operate.

It is determined whether the unsealed battery cell has reached the cooling position, and the start of the cooling apparatus is on the premise that the unsealed battery cell has reached the preset position, which avoids the continuous operation of the cooling apparatus, thereby reducing not only the energy consumption but also the failure rate of the cooling apparatus.

A second aspect of this application provides a flatness adjustment device for battery housing, including:
a cooling apparatus, where the cooling apparatus is configured to blow out cold air towards an unsealed battery cell in a cooling position; and
a control apparatus, where the control apparatus is configured to execute the flatness adjustment method for battery housing described above, and the control apparatus is in communication connection with the cooling apparatus.

In some embodiments of this application, the flatness adjustment device for battery housing further includes an acquisition apparatus, where the acquisition apparatus is in communication connection with the control apparatus, and the acquisition apparatus is configured to acquire whether an unsealed battery cell is in a cooling position.

In some embodiments of this application, the cooling apparatus is an air conditioner.

A third aspect of this application provides a battery manufacturing system, including:
a formation device;
the flatness adjustment device for battery housing described above, where the flatness adjustment device for battery housing is disposed downstream of the formation device; and
a sealing device, where the sealing device is disposed downstream of the flatness adjustment device for battery housing and configured to seal the cooled battery housing.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

FIG. 1 is a schematic structural diagram of a vehicle according to an embodiment of this application;
FIG. 2 is a schematic diagram of an exploded structure of a battery cell according to an embodiment of this application;
FIG. 3 schematically shows a temperature reduction curve of a battery cell in the related art;
FIG. 4 is a schematic structural diagram of a battery housing with a flatness change before and after temperature reduction in the related art;
FIG. 5 schematically shows a temperature reduction curve of a battery cell according to an embodiment of this application;
FIG. 6 is a schematic structural diagram of a battery housing with a flatness change before and after temperature reduction according to an embodiment of this application;
FIG. 7 is a flowchart of a flatness adjustment method for battery housing according to an embodiment of this application;
FIG. 8 is a structural block diagram of a flatness adjustment device for battery housing according to an embodiment of this application; and
FIG. 9 is a structural block diagram of a battery manufacturing system according to an embodiment of this application.

### Reference signs:

1000. vehicle;
100. battery, 200. controller, 300. motor;
11. battery cell;
111. end cover, 111a. electrode terminal;
112. battery housing;
113. cell assembly;
2000. battery manufacturing system;
2100. formation device, 2200. flatness adjustment device, 2201. acquisition apparatus, 2202. control apparatus, 2203. cooling apparatus, 2300. sealing device, and 2400. conveying device.

### DETAILED DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "have", and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various positions in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in the embodiments of this application as appropriate to specific situations.

Currently, from a perspective of the market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

The applicant has noticed that after the formation process, the internal temperature of the existing battery cell can reach as high as 45°C to 50°C, while the external temperature is 25°C. Under these conditions, when the battery cell is sealed through welding with a sealing nail, a temperature difference exists between the inside and outside. As the internal temperature of the battery cell decreases to equal the external temperature of 25°C, a pressure difference is presented, causing the large surface and side surface of the battery housing to become more concave and their flatness to go beyond the specification. When the flatness of the battery housing goes beyond specification, the yield of wrapping with an insulation blue film reduces when individual battery cells are subsequently wrapped with the insulation blue film. In addition, the module section requires the assembly of individual battery cells. In this process, adhesive is applied to the side and large surfaces of the battery cells (to enhance the connection between individual cells, thereby improving the overall structural strength of the battery pack), with the amount of the adhesive fixed, the flatness of the battery housing going beyond specification leads to an increase in the defect rate of adhesive overflow or insufficient adhesive coverage area at the module end. Therefore, persons skilled in the art need to urgently solve the technical problem of the flatness of the large surface and side surface of the battery housing going beyond the specification due to the pressure difference caused by the difference between inside and outside temperatures of the battery cell.

To solve the problem of the flatness of the large surface and side surface of the battery housing going beyond the specification due to the pressure difference caused by the difference between inside and outside temperatures of the battery cell, the applicant has found through study that after the formation process on the battery cell is finished, cooling the unsealed battery cell after formation to reduce a difference between inside and outside temperatures of the unsealed battery cell, and then sealing the cooled unsealed battery cell can avoid the flatness of the large surface and side surface of the battery housing going beyond specification due to the pressure difference caused by the difference between inside and outside temperatures of the battery cell.

The battery cell disclosed in the embodiments of this application may be used without limitation in electric apparatuses such as vehicles, ships, or aircrafts. The battery cell, battery, and the like disclosed in this application may be used to constitute a power supply system of that electric apparatus.

An embodiment of this application provides an electric apparatus that uses a battery as a power source. The electric apparatus may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

It should be understood that the technical solutions described in the embodiments of this application are not only applicable to the batteries and electric devices described above, but also applicable to all batteries including housings and electric devices using batteries. However, for the brevity of description, in the following embodiments, an electric vehicle is used as an example for description.

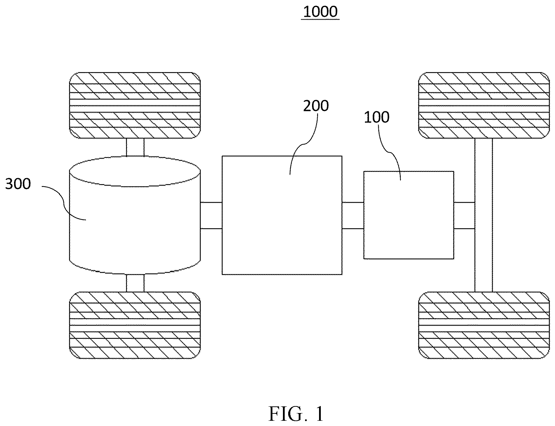

Referring to FIG. 1, FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be disposed at the bottom, front or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

In order to meet different requirements for power use, the battery 100 may include a plurality of battery cells 11. A battery cell 11 is a smallest unit constituting a battery module or a battery pack. The plurality of battery cells 11 can be connected in series and/or in parallel through an electrode terminal 111a for various application scenarios. The battery 100 mentioned in this application includes a battery module or a battery pack. The plurality of battery cells 11 may be connected in series, parallel, or series and parallel, and being connected in series and parallel means a combination of series and parallel connections. The battery 100 may also be called a battery pack. In the embodiments of this application, the plurality of battery cells 11 may be directly combined into a battery pack, or they may be first combined into battery modules which are then combined into a battery pack.

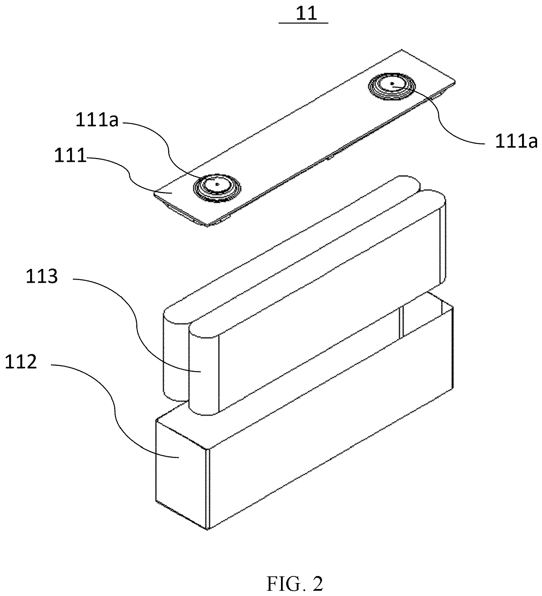

FIG. 2 is a schematic diagram of an exploded structure of a battery cell 11 according to some embodiments of this application. The battery cell 11 refers to a smallest unit constituting a battery. The battery cell 11 includes a battery box and a cell assembly 113, where the battery box includes an end cover 111 and a battery housing 112.

The end cover 111 refers to a component that covers an opening of the battery housing 112 to isolate an internal environment of the battery cell 11 from an external environment. A shape of the end cover 111 is not limited and may be adapted to a shape of the battery housing 112 to fit the battery housing 112. Optionally, the end cover 111 may be made of a material with specified hardness and strength (for example, aluminum alloy), so that the end cover 111 is less likely to deform when subjected to extrusion and collision, allowing the battery cell 11 to have higher structural strength and enhanced safety performance. The end cover 111 may be provided with functional components such as an electrode terminal 111a. The electrode terminal 111a may be configured to electrically connect to the cell assembly 113 for outputting or inputting electrical energy of the battery cell 11. In some embodiments, the end cover 111 may further be provided with a pressure relief mechanism for releasing internal pressure when the internal pressure or a temperature of the battery cell 11 reaches a threshold. In some embodiments, an insulator may also be provided at an inner side of the end cover 111. The insulator may be configured to isolate an electrically connected component in the battery housing 112 from the end cover 111 to reduce a risk of short circuit. For example, the insulator may be made of plastic, rubber, or the like.

The battery housing 112 is an assembly configured to cooperate with the end cover 111 to form an internal environment of the battery cell 11, where the formed internal environment can be configured to accommodate the cell assembly 113, an electrolyte (not shown in the figure), and other components. The battery housing 112 and the end cover 111 may be independent components, an opening may be provided in the battery housing 112, and the end cover 111 covers the opening to form the internal environment of the battery cell 11. The end cover 111 and the battery housing 112 are not limited and may also be integrated. Specifically, the end cover 111 and the battery housing 112 may form a shared connection surface before other components are disposed inside the housing, and then the battery housing 112 is covered with the end cover 111 when inside of the battery housing 112 needs to be enclosed. The battery housing 112 may be of various shapes and sizes, such as a cuboid shape, a cylindrical shape, and a hexagonal prism shape. Specifically, a shape of the battery housing 112 may be determined according to a specific shape and size of the cell assembly 113. The battery housing 112 may be made of various materials, such as copper, iron, aluminum, stainless steel, aluminum alloy, and plastic, which are not particularly limited in the embodiments of this application.

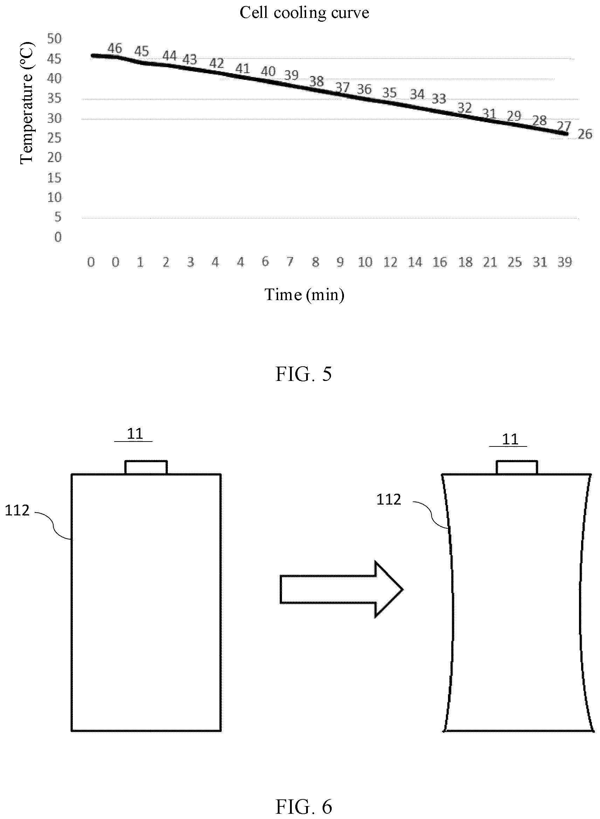

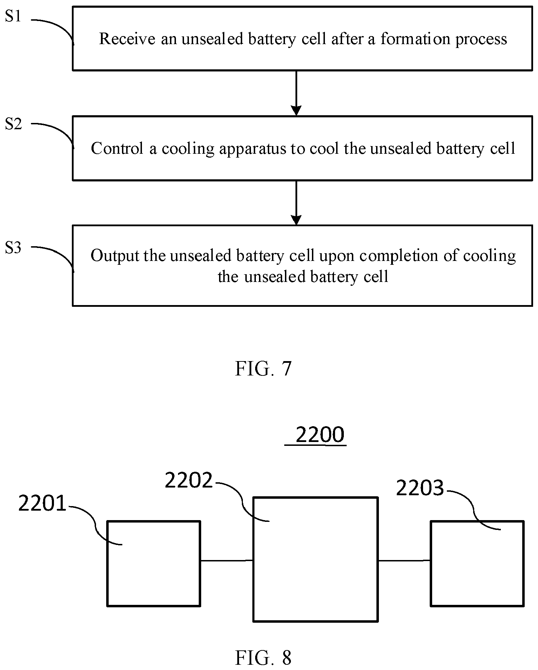

In some embodiments of this application, as shown in FIGs. 5 and 7, this application further provides a flatness adjustment method for battery housing 112, including the following steps:
S 1: Receive an unsealed battery cell 11 after a formation process.
S2: Control a cooling apparatus 2203 to cool the unsealed battery cell 11.
S3: Output the unsealed battery cell 11 upon completion of cooling the unsealed battery cell 11.

According to the flatness adjustment method for battery housing 112 of this application, the unsealed battery cell 11 after formation is cooled, reducing a difference between inside and outside temperatures of the unsealed battery cell 11, and then the cooled unsealed battery cell 11 is sealed, which avoids the flatness of the large surface and side surface of the battery housing 112 going beyond specification due to the pressure difference caused by the difference between inside and outside temperatures of the battery cell 11.

Further, during production of the battery cell 11, the battery cell 11 needs to undergo a formation process, the battery cell 11 after the formation process is of an unsealed structure, and therefore the unsealed battery cell 11 needs to be sealed subsequently at the station. In addition, the opening end of the battery cell 11 needs to be sealed during the sealing, to isolate the inside and outside of the battery cell 11, preventing adverse effects from the external environment on the battery cell 11.

In this application, the battery cell 11 is cooled after the battery cell 11 undergoes the formation process and before the sealing operation is performed. In other words, the cooling apparatus 2203 is disposed between a formation device 2100 and a sealing device 2300. The battery cell 11 after the formation process is an unsealed battery cell 11, and when the unsealed battery cell 11 is moved to the sealing device 2300, the cooling apparatus 2203 cools the unsealed battery cell 11 by heat exchange with the unsealed battery cell 11 to cool the unsealed battery cell 11. When the unsealed battery cell 11 reaches the sealing device 2300, the temperature of the unsealed battery cell 11 meets the predetermined requirement, and then the sealing device 2300 is used to seal the unsealed battery cell 11. In this way, the flatness of the large surface and side surface of the battery housing 112 going beyond specification due to the pressure difference caused by the difference between inside and outside temperatures of the battery cell 11 is avoided.

In addition, the cooling apparatus 2203 cools the unsealed battery cell 11 through heat exchange. Specifically, the heat exchange may be achieved through direct contact (for example, a cold plate with circulating coolant is provided inside to be in direct contact with the battery housing 112), or through indirect contact (for example, an air conditioner or a fan is used to exchange heat with the unsealed battery cell 11 via the airflow).

In some embodiments of this application, in the step of controlling a cooling apparatus 2203 to cool the unsealed battery cell 11, the cooling apparatus 2203 cools the unsealed battery cell 11 by blowing cold air.

Specifically, after controlled to operate, the cooling apparatus 2203 blows out cold air towards the unsealed battery cell 11, and heat exchange with the unsealed battery cell 11 is achieved via the temperature difference between the cold air and the unsealed battery cell 11, so as to cool the unsealed battery cell 11. As the cooling apparatus 2203 is arranged to dissipate heat from the unsealed battery cell 11 by blowing cold air towards the unsealed battery cell 11, the structure of the cooling apparatus 2203 can be simplified, reducing the manufacturing costs of the device.

In addition, as the temperature of the unsealed battery cell 11 is reduced by blowing cold air, the cold air can be in good contact with the inside and outside of the unsealed battery cell 11, thus ensuring the heat exchange effect. This further ensures the effect of cooling the unsealed battery cell 11, thus ensuring that the battery housing meets the specification requirement for flatness after the unsealed battery cell 11 is sealed.

In addition, with the cooling apparatus 2203 arranged to cool the unsealed battery cell 11 by blowing cold air, it is unnecessary to dispose the cooling apparatus 2203 at the periphery of the unsealed battery cell 11, and only the position of the air outlet of the cooling apparatus 2203 is arranged, thus decreasing the quantity of apparatuses at the production site, so as to increase the space utilization of the production shop.

In some embodiments of this application, the step of controlling a cooling apparatus 2203 to cool the unsealed battery cell 11 includes:
matching cooling parameters according to the type of the unsealed battery cell 11; and
controlling, according to the cooling parameters, the cooling apparatus 2203 to operate.

Specifically, during production of the battery cell 11, the battery cell 11 has many specifications, with multiple cooling parameters pre-stored. When a type of battery cell 11 is cooled, the cooling parameters are matched corresponding to the type of the current battery cell 11, and the cooling apparatus 2203 cools the to-be-cooled battery cell 11 based on the cooling parameters. Cooling parameters are matched for different types of unsealed battery cells 11, thus ensuring the cooling effect on the unsealed battery cell 11, such that when different types of battery cells 11 are manufactured, it can be further ensured that battery housings 112 of different types of battery cells 11 have good and consistent flatness.

It should be understood that the battery cells 11 are different in parameters such as shape and size, and if using a single operation mode, the cooling apparatus 2203 cannot effectively ensure the optimal cooling effect on each type of battery cell 11. Therefore, cooling parameters are set for different types of battery cells 11, and cooling parameters corresponding to a current battery cell 11 are matched to achieve the optimal cooling effect on the battery cell 11, such that the battery housing meets the specification requirement for flatness after the unsealed battery cell 11 is sealed.

It should be noted that the cooling parameters in this application include but are not limited to a preset cooling time, a preset cooling temperature, and a preset cooling airflow speed (the cooling apparatus 2203 cools the battery cell 11 by blowing cold air),

In some embodiments of this application, the cooling parameters include a preset cooling time, and the preset cooling time is denoted as t, where t∈(0 min, 60 min).

Specifically, when cooled, the unsealed battery cell 11 has its temperature lowered through heat exchange (for example, the cooling apparatus 2203 cools the battery cell 11 via cold air), and the overall cooling process requires certain time. The preset cooling time is set to fully cool the unsealed battery cell 11 and ensure the cooling effect. The cooled unsealed battery cell 11 is then sealed, further preventing the problem of the flatness of the large surface and side surface of the battery housing 112 going beyond specification caused by the difference between inside and outside temperatures of the battery cell 11.

It should be understood that the range of the preset cooling time t may be (0 min, 7 min), (6 min, 16 min), (15 min, 22 min), (21 min, 27 min), (26 min, 33 min), (31 min, 38 min), (37 min, 42 min), (41 min, 50 min), (48 min, 55 min), (54 min, 60 min), and the like.

It should be noted that in this embodiment of this application, the preset cooling time can be adjusted according to actual production, where the value of t may be 5 min, 10 min, 15 min, 20 min, 25 min, 30 min, 35 min, 40 min, 45 min, 50 min, 55 min, and the like.

In some embodiments of this application, the preset cooling time t is set to 15 min.

Specifically, when the cooling apparatus 2203 cools the unsealed battery cell 11, the desired cooling effect is that the temperature of the unsealed battery cell 11 is consistent with the ambient temperature. However, in order to make the temperature of the unsealed battery cell 11 reduced to the ambient temperature, a long cooling time and/or a low cooling temperature must be required. When the cooling time is long, the production pace is affected inevitably, reducing the production efficiency. When the low cooling temperature is used, the cooling apparatus 2203 inevitably consumes a large amount of energy, increasing the production costs.

With the preset cooling time set to 15 min, on the basis of ensuring cooling on the battery cell 11, the production pace can be ensured, thus guaranteeing the production efficiency, and avoiding the problem of increasing the production costs due to the high energy consumed by the cooling apparatus 2203.

In some embodiments of this application, the step of outputting the unsealed battery cell 11 upon completion of cooling the unsealed battery cell 11 includes:
obtaining a current cooling time;
comparing the current cooling time with the preset cooling time; and
controlling, under the condition that the current cooling time is greater than or equal to the preset cooling time, the cooling apparatus 2203 to stop operating.

Specifically, when the cooling apparatus 2203 is used to cool the unsealed battery cell 11, on the premise of ensuring the cooling effect, the production costs are reduced. In this embodiment of this application, when the unsealed battery cell 11 needs to be cooled the cooling apparatus 2203 is operated, and when the temperature of the unsealed battery cell 11 meets the requirement, the cooling apparatus 2203 stops operating. In addition, the current cooling time and the preset cooling time are used as determination parameters. Whether the current cooling time has reached the preset cooling time is determined, to ensure the cooling effect on the unsealed battery cell 11 and reduce the operation time of the cooling apparatus 2203, thus reducing the energy consumption, reducing the production costs.

It should be noted that in another embodiment of this application, the temperature may also be used as basis to determine whether the cooling apparatus 2203 operates. For example, a preset temperature is set and compared with the current temperature of the unsealed battery cell 11. When the current temperature of the unsealed battery cell 11 reaches the preset temperature, the cooling apparatus 2203 is controlled to stop operating, so as to reduce the energy consumption.

In some embodiments of this application, the cooling parameters include a preset cooling temperature, and the preset cooling temperature is denoted as T, where T∈(0°C, 25°C).

Specifically, the cooling apparatus 2203 provides a low-temperature medium to the unsealed battery cell 11, using the low-temperature medium for heat exchange with the unsealed battery cell 11 to cool the unsealed battery cell 11, where temperature of the low-temperature medium directly affects the cooling efficiency on the unsealed battery cell 11. With the preset cooling temperature set for the cooling apparatus 2203, the large temperature difference between the preset cooling temperature and the unsealed battery cell 11 is used for quickly cooling the unsealed battery cell 11, thus shortening the cooling time, further ensuring the production pace.

It should be understood that the range of the preset cooling temperature T may be (0°C, 5°C), (3°C, 10°C), (9°C, 15°C), (14°C, 20°C), (19°C, 22°C), (21°C, 25°C), and the like.

It should be noted that in this embodiment of this application, the preset cooling temperature can be adjusted based on actual production, where the value of T may be 4°C, 6°C, 8°C, 10°C, 12°C, 14°C, 16°C, 18°C, 20°C, 22°C, 24°C, and the like.

In some embodiments of this application, the preset cooling temperature T is set to 16°C.

Specifically, when the cooling apparatus 2203 cools the unsealed battery cell 11, the desired cooling effect is that the temperature of the unsealed battery cell 11 is consistent with the ambient temperature. However, in order to make the temperature of the unsealed battery cell 11 reduced to the ambient temperature, a low cooling temperature must be required. When the low cooling temperature is used, the cooling apparatus 2203 inevitably consumes a large amount of energy, increasing the production costs.

With the preset cooling temperature set to 16°C, on the basis of ensuring the cooling on the battery cell 11 and the production pace, the energy consumption can be reduced, thus reducing the manufacturing costs.

In some embodiments of this application, the cooling parameters include a preset cooling airflow speed, and the preset cooling airflow speed is denoted as v, where v∈(0 m/s, 25 m/s).

Specifically, in this application, the cooling apparatus 2203 is arranged to dissipate heat from the unsealed battery cell 11 by blowing cold air, and the speed at which the cooling apparatus 2203 blows out cold air affects the heat dissipation efficiency for the unsealed battery cell 11. When the speed of the cold air is fast, the heat exchange speed is fast, but the cooling apparatus 2203 needs to consume a large amount of energy. When the speed of the cold air is slow, the cooling apparatus 2203 consumes a small amount of energy, but the heat exchange speed is slow.

With the preset cooling airflow speed set, heat can be exchanged quickly between the unsealed battery cell 11 and the cold air, thus increasing the rate of heat exchange and quickly cooling the unsealed battery cell 11, further ensuring the production pace.

It should be understood that the range of the preset cooling airflow speed v may be (0 m/s, 5 m/s), (3 m/s, 10 m/s), (9 m/s, 15 m/s), (14 m/s, 20 m/s), (19 m/s, 22 m/s), (21 m/s, 25 m/s), and the like.

It should be noted that in this embodiment of this application, the preset cooling airflow speed may be adjusted according to actual production, where the value of v may be 2 m/s, 4 m/s, 6 m/s, 8 m/s, 10 m/s, 12 m/s, 14 m/s, 16 m/s, 18 m/s, 20 m/s, 22 m/s, 24 m/s, and the like.

In some embodiments of this application, the preset cooling airflow speed v is set to 4 m/s.

Specifically, when the cooling apparatus 2203 cools the unsealed battery cell 11 by blowing cold air towards the unsealed battery cell 11, the desired cooling effect is that the temperature of the unsealed battery cell 11 is consistent with the ambient temperature. However, in order to make the temperature of the unsealed battery cell 11 reduced to the ambient temperature, a high air speed must be required. When the high air speed is used, the cooling apparatus 2203 inevitably consumes a large amount of energy, increasing the production costs.

With the preset cooling airflow speed set to 4 m/s, on the basis of ensuring the cooling on the battery cell 11, the situation can be avoided in which the unsealed battery cell 11 is blown down and damaged by the cold air, thus ensuring the good production quality of the battery cell 11.

In some embodiments of this application, after the step of receiving an unsealed battery cell 11 after a formation process, and before the step of controlling a cooling apparatus 2203 to cool the unsealed battery cell 11, the method further includes:
obtaining a current position of the unsealed battery cell 11;
determining, based on the current position of the unsealed battery cell 11, whether the unsealed battery cell 11 has reached a cooling position; and
controlling, under the condition that the unsealed battery cell 11 has reached the cooling position, the cooling apparatus 2203 to operate.

Specifically, when the cooling apparatus 2203 is used to cool the unsealed battery cell 11, on the premise of ensuring the cooling effect, the production costs are reduced. In this embodiment of this application, when the temperature of the unsealed battery cell 11 needs to be reduced, the cooling apparatus 2203 is operated, and when the temperature of the unsealed battery cell 11 does not need to be reduced, the cooling apparatus 2203 stops operating. Therefore, when no corresponding unsealed battery cell 11 is in the cooling position, the cooling apparatus 2203 should be in a stopped state, and when a corresponding unsealed battery cell 11 is in the cooling position, the cooling apparatus 2203 is in an operating state.

As it is determined whether the unsealed battery cell 11 has reached the cooling position, the cooling apparatus 2203 is operated on the premise that the unsealed battery cell 11 has reached the cooling position, avoiding the continuous operation of the cooling apparatus 2203. This not only reduces the energy consumption, but also reduces the failure rate of the cooling apparatus 2203.

It should be noted that in other embodiments of this application, the cooling apparatus 2203 may also be arranged to operate periodically, that is, operates for a period and stops operating for a period. When the cooling apparatus 2203 is in the period of stopping operating, the unsealed battery cell 11 undergoes loading or unloading actions. When the cooling apparatus 2203 is in the operation period, the unsealed battery cell 11 to be cooled is in the cooling position, so as to reduce the energy consumption.

As shown in FIGs. 5 to 8, a second aspect of this application provides a flatness adjustment device 2200 of battery housing 112, including:
a cooling apparatus 2203, where the cooling apparatus 2203 is configured to blow out cold air towards an unsealed battery cell 11 in a cooling position; and
a control apparatus 2202, where the control apparatus 2202 is configured to execute the flatness adjustment method for battery housing 112 described above, and the control apparatus 2202 is in communication connection with the cooling apparatus 2203.

According to the flatness adjustment device 2200 for battery housing 112 of this application, when the unsealed battery cell 11 after the formation reaches the cooling position, the control apparatus 2202 controls the cooling apparatus 2203 to operate. The cooling apparatus 2203 cools the unsealed battery cell 11 according to the cooling parameters set by the control apparatus 2202, reducing a difference between inside and outside temperatures of the unsealed battery cell 11, and then the cooled unsealed battery cell 11 is sealed, which avoids the flatness of the large surface and side surface of the battery housing 112 going beyond specification due to the pressure difference caused by the difference between inside and outside temperatures of the battery cell 11.

It should be noted that the control apparatus 2202 includes a human-machine interaction module, a processing module, a storage module, and the like. The human-machine interaction module is used for the operator to input corresponding instructions for flatness adjustment settings (via buttons, touch screens, mobile terminals, and the like), and for the flatness adjustment device 2200 to display current operation status information (with display function). The processing module is used for data processing and calculation, and the storage module is used for data storage, and the like.

In some embodiments of this application, as shown in FIG. 8, the flatness adjustment device for battery housing further includes an acquisition apparatus 2201, where the acquisition apparatus 2201 is in communication connection with the control apparatus 2202, and the acquisition apparatus 2201 is configured to acquire whether the unsealed battery cell 11 is in the cooling position.

Specifically, with the disposition of the acquisition apparatus 2201, it can be quickly known whether the unsealed battery cell 11 is in the cooling position, so as to provide basis for whether the cooling apparatus 2203 is controlled to start, avoiding an increase in the energy consumption due to the continuous operation of the cooling apparatus 2203 and decreasing frequent occurrences of malfunctions.

It should be noted that the acquisition apparatus 2201 may be a photoelectric sensor, an infrared sensor, or the like.

In some embodiments of this application, the cooling apparatus 2203 is an air conditioner.

Specifically, during operation, the air conditioner can deliver cold air externally to cool the unsealed battery cell 11. The cold air can be in full contact with the unsealed battery cell 11, thus ensuring the cooling effect. In addition, the air conditioner may be disposed far away from the cooling position, avoiding occupying the space surrounding the production line, thus improving the space utilization of the production line.

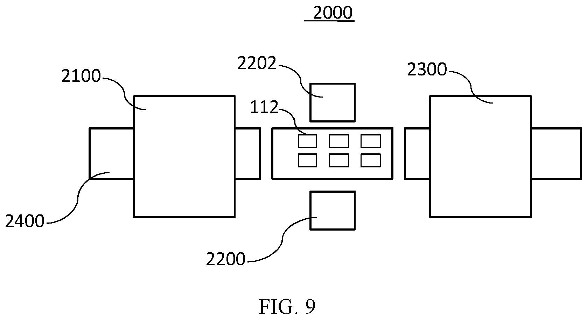

As shown in FIGs. 5 to 9, a third aspect of this application provides a battery manufacturing system 2000, including:
a formation device 2100;
the flatness adjustment device 2200 for battery housing 112, where the flatness adjustment device 2200 for battery housing 112 is disposed downstream of the formation device 2100; and
a sealing device 2300, where the sealing device 2300 is disposed downstream of the flatness adjustment device 2200 for battery housing 112 and configured to seal the cooled battery housing 112.

The battery manufacturing system 2000 according to this application, the formation device 2100, the flatness adjustment device 2200, and the sealing device 2300 are arranged sequentially along the production line. The formation device 2100 is disposed upstream, the sealing device 2300 is disposed downstream, and the cooling device is disposed in the middle. In the process of manufacturing the battery cell 11, the formation device 2100 is configured to perform the formation process on the battery cell 11. When the unsealed battery cell 11 after the formation reaches the cooling position, the control apparatus 2202 controls the cooling apparatus 2203 to operate, and the cooling apparatus 2203 cools the unsealed battery cell 11 according to the cooling parameters set by the control apparatus 2202, reducing a difference between inside and outside temperatures of the unsealed battery cell 11. The unsealed battery cell 11, after cooled, undergoes sealing operation by the sealing device 2300 (for example, welding an opening with a sealing nail).

The battery cell 11 being cooled before sealed avoids the flatness of the large surface and side surface of the battery housing 112 going beyond specification due to the pressure difference caused by the difference between inside and outside temperatures of the battery cell 11.

It should be noted that, the battery manufacturing system 2000 further includes a conveying device 2400 (a conveyor belt or the like), where the conveying device 2400 is configured to transfer the battery cell 11, for example, transferring the battery cell 11 into the formation device 2100, from the formation device 2100 to the cooling position, from the cooling position to the sealing device 2300, and from the sealing device 2300 to the next station.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

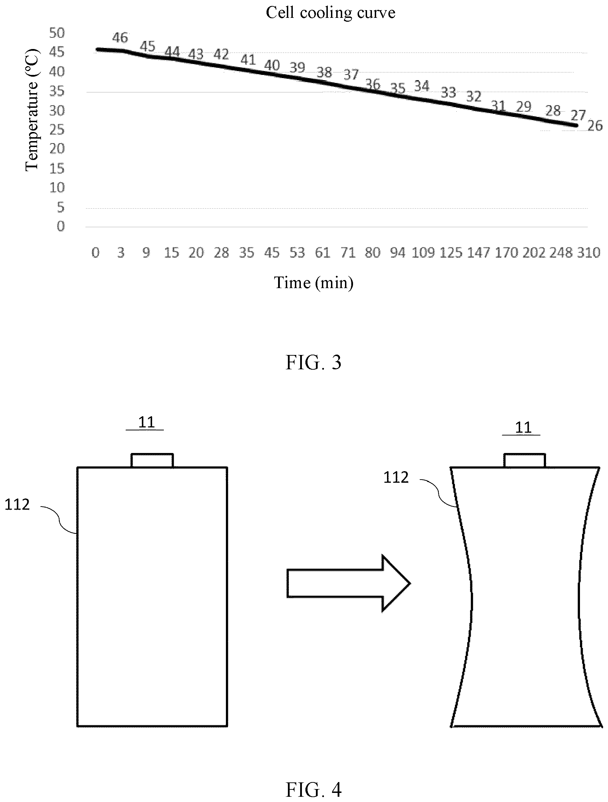

In the prior art, the battery cell 11, after subjected to the formation process, is at 45°C to 50°C, and it always takes 15 min for the battery cell 11 to reach the station for welding with sealing nails. As shown in FIG. 3, based on the normal cooling curve of the battery cell 11, it can be known that the temperature of the battery cell 11 after 15 min is still at 40°C to 45°C. As shown in FIG. 4, after the opening of battery cell 11 is sealed through welding with sealing nails, a difference between inside and outside temperatures of the battery cell 11 is present. When the internal temperature of the battery cell 11 is cooled to the outside temperature, a large pressure difference is generated, concaving the large and side surfaces of the battery housing 112, thus causing the flatness to go beyond the specification.

In this application, the battery cell 11 after the formation is quickly cooled using cold air at a high speed. As shown in FIGs. 5 and 6, after the flatness adjustment method for battery housing 112 in this application is used, the battery cell 11 can be cooled to 35°C after 15 min and then sealed through welding with sealing nails, such that the small difference between the inside and outside temperatures and the small pressure difference of the battery cell 11 avoids the flatness of the large and side surfaces of the battery housing 112 going beyond specification.

In some embodiments of this application, in the flatness adjustment method for battery housing 112 provided by this application, the battery cell 11 after formation reaches the cooling position, and the cooling apparatus 2203 is used to cool the unsealed battery cell 11 according to the cooling parameters by blowing cold air.

Under different cooling parameters, the unsealed battery cells 11 show different cooling effects, which is shown by comparison between four groups of cells processed with different cooling parameters and a group of cells naturally cooled.
1) 100 battery cells 11 are selected and quickly cooled at 16°C at an air speed of 4 m/s for 10 min.
2) 100 battery cells 11 are selected and quickly cooled at 10°C at an air speed of 4 m/s for 10 min.
3) 100 battery cells 11 are selected and quickly cooled at 16°C at an air speed of 4 m/s for 30 min.
4) 100 battery cells 11 are selected and quickly cooled at 16°C at an air speed of 2 m/s for 10 min.
5) 100 battery cells 11 are selected and undergo no particular process.

The five types of battery cells 11 are measured in flatness at the final inspection station, and the production flatness specification is -0.4 mm to 0 mm.

**Table 1**

| No. | Temperat ure (°C) | Air speed (m/s) | Time (min) | Large surface flatness (mm) | Side surface flatness (mm) |
|---|---|---|---|---|---|
| 1 | 16 | 4 | 10 | -0.24 | -0.35 |
| 2 | 10 | 4 | 10 | -0.22 | -0.30 |
| 3 | 16 | 4 | 30 | -0.15 | -0.2 |
| 4 | 16 | 2 | 10 | -0.28 | -0.4 |
| 5 | / | / | / | -0.45 | -0.57 |

As shown in FIG. 1, with the increases in the cooling time and the air speed as well as the decrease in the cooling temperature, the battery cells 11 all show a decrease in flatness. The foregoing parameters can be controlled according to different product design specification to adjust the flatness for meeting the design specification.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in the embodiments can be combined in any manner. This application is not limited to the specific embodiments disclosed in this specification but includes all technical solutions falling in the scope of the claims.

## Claims

1. A flatness adjustment method for battery housing, **characterized by**:
receiving an unsealed battery cell after a formation process;
controlling a cooling apparatus to cool the unsealed battery cell; and
outputting the unsealed battery cell upon completion of cooling the unsealed battery cell.

2. The flatness adjustment method for battery housing according to claim 1, wherein in the step of controlling a cooling apparatus to cool the unsealed battery cell, the cooling apparatus cools the unsealed battery cell by blowing cold air.

3. The flatness adjustment method for battery housing according to claim 1 or 2, wherein the step of controlling a cooling apparatus to cool the unsealed battery cell comprises:
matching cooling parameters according to the type of the unsealed battery cell; and
controlling, according to the cooling parameters, the cooling apparatus to operate.

4. The flatness adjustment method for battery housing according to claim 3, wherein the cooling parameters comprise a preset cooling time t, wherein t∈(0 min, 60 min).

5. The flatness adjustment method for battery housing according to claim 4, wherein the preset cooling time t is set to 15 min.

6. The flatness adjustment method for battery housing according to claim 4 or 5, wherein the step of outputting the unsealed battery cell upon completion of cooling the unsealed battery cell comprises:
obtaining a current cooling time;
comparing the current cooling time with the preset cooling time; and
controlling, under the condition that the current cooling time is greater than or equal to the preset cooling time, the cooling apparatus to stop operating.

7. The flatness adjustment method for battery housing according to any one of claims 3 to 6, wherein the cooling parameters comprise a preset cooling temperature, and the preset cooling temperature is denoted as T, wherein T∈(0°C, 25°C).

8. The flatness adjustment method for battery housing according to claim 7, wherein the preset cooling temperature T is set to 16°C.

9. The flatness adjustment method for battery housing according to any one of claims 3 to 8, wherein the cooling parameters comprise a preset cooling airflow speed, and the preset cooling airflow speed is denoted as v, wherein v∈(0 m/s, 25 m/s).

10. The flatness adjustment method for battery housing according to claim 9, wherein the preset cooling airflow speed v is set to 4 m/s.

11. The flatness adjustment method for battery housing according to any one of claims 1 to 10, wherein after the step of receiving an unsealed battery cell after a formation process, and before the step of controlling a cooling apparatus to cool the unsealed battery cell, the method further comprises:
obtaining a current position of the unsealed battery cell;
determining, based on the current position of the unsealed battery cell, whether the unsealed battery cell has reached a cooling position; and
controlling, under the condition that the unsealed battery cell has reached the cooling position, the cooling apparatus to operate.

12. A flatness adjustment device for battery housing, comprising:
a cooling apparatus, wherein the cooling apparatus is configured to blow cold air towards an unsealed battery cell in a cooling position; and
a control apparatus, wherein the control apparatus is configured to execute the flatness adjustment method for battery housing according to any one of claims 1 to 11, and the control apparatus is in communication connection with the cooling apparatus.

13. The flatness adjustment device for battery housing according to claim 12, further comprising an acquisition apparatus, wherein the acquisition apparatus is in communication connection with the control apparatus, and the acquisition apparatus is configured to acquire whether an unsealed battery cell is in a cooling position.

14. The flatness adjustment device for battery housing according to claim 12 or 13, wherein the cooling apparatus is an air conditioner.

15. A battery manufacturing system, comprising:
a formation device;
the flatness adjustment device for battery housing according to any one of claims 12 to 14, wherein the flatness adjustment device for battery housing is disposed downstream of the formation device; and
a sealing device, wherein the sealing device is disposed downstream of the flatness adjustment device for battery housing and configured to seal the cooled battery housing.
